(19) Europäisches Patentamt
European Patent Office
Office européen des brevets

(11) EP 0 483 695 B1

(12) EUROPEAN PATENT SPECIFICATION

(45) Date of publication and mention of the grant of the patent:
**02.10.1996 Bulletin 1996/40**

(51) Int Cl.[6]: **C08L 29/04**, B32B 27/28 // (C08L29/04, 23:02, 51:06)

(21) Application number: **91118271.5**

(22) Date of filing: **26.10.1991**

# (54) Resin composition and use thereof

Harzzusammensetzung und ihre Verwendung

Composition de résine et son utilisation

(84) Designated Contracting States:
**DE FR GB IT**

(30) Priority: **29.10.1990 JP 293070/90**
**29.10.1990 JP 293071/90**
**29.10.1990 JP 293072/90**
**29.10.1990 JP 293073/90**

(43) Date of publication of application:
**06.05.1992 Bulletin 1992/19**

(73) Proprietor: **Nippon Gohsei Kagaku Kogyo Kabushiki Kaisha**
**Osaka-shi, Osaka-fu (JP)**

(72) Inventors:
- **Takida, Hiroshi**
**Takatsuki-shi, Osaka 569 (JP)**
- **Uemura, Tomoyoshi**
**Ibaraki-shi, Osaka 567 (JP)**
- **Honda, Hiroyuki**
**Naka-gun, Kanagawa 255 (JP)**

(74) Representative: **Türk, Gille, Hrabal, Leifert**
**Brucknerstrasse 20**
**40593 Düsseldorf (DE)**

(56) References cited:
**EP-A- 0 440 535** **EP-A- 0 440 557**
**EP-A- 0 440 558** **EP-A- 0 440 559**
**EP-A- 0 440 560** **EP-A- 0 444 977**
**WO-A-90/12063** **GB-A- 2 185 986**

- **PATENT ABSTRACTS OF JAPAN vol. 11, no. 185 (C-428)(2632) 13 June 1987 ( TOYO SEIKAN K. LTD ) 20 January 1987**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 483 695 B1

## Description

BACKGROUND OF THE INVENTION

[Industrial Field of Utilization]

The present invention provides a saponified ethylene-vinyl acetate copolymer composition markedly improved in long run property in melt-molding and in quality.

[Prior Art]

Saponified ethylene-vinyl acetate copolymers are excellent in various properties such as oxygen barrier property, and mechanical strength, and therefore have found application in various uses such as film, sheet, container material, and textile fiber.

However, since such saponified copolymers are highly hygroscopic, shaped articles based on these materials are disadvantageous in that they undergo marked change in physical properties such as flexibility according to changes in the humidity and temperature of the ambient atmosphere and, in particular, their oxygen barrier property is so highly dependent on humidity that they do not effectively seal off oxygen in a high-humidity environment.

Furthermore, because of poor stretchability and flexibility, shaped articles based on this type of copolymer readily undergo uneven stretching in the course of deep-drawing or other molding procedures involving stretching and/or give pinholes in use after molding, imposing limitations on their use as packaging materials.

Further, this saponified copolymer gives rise to a variation in product thickness in the molding process for manufacture of film or sheet, with the consequent decrease in the marketability of the product.

To cope with these drawbacks, it has been attempted to laminate a water-proof resin material such as a polyolefin film to a saponified ethylene-vinyl acetate copolymer sheet or improve stretchability and flexibility of the molding by incorporating a polyolefin in the saponified copolymer.

[Problems which the Invention is to solve]

Recent technological innovations and social needs for higher quality shaped articles have emphasized the necessity of developing novel saponified ethylene-vinyl acetate copolymer compositions much more improved than the conventional ones.

However, such resin mixtures as mentioned above are inferior in the so-called long run property. When they are used to produce films, sheets and the like shaped articles by melt-molding, for instance, said mixture compositions undergo gelation during molding and/or give, during molding, thermally discolored or carbonized resins (the so-called scorches), which adhere to the extruder inside. Accordingly the melt molding cannot be done continuously for a prolonged period of time. To cope with this problem, the combined use of a hydrotalcite compound or a hydrotalcite solid solution has been proposed as a measure therefor. Adding that, this method does not overcome the drawbacks radically, either. Thus, the compatibility between the saponified ethylene-vinyl acetate copolymer and said polyolefin is not necessarily good enough and despite many efforts to overcome this disadvantage, the results are not as satisfactory as desired. Thus, the prior art technologies are not successful enough to improve the water-resistance, stretchability and flexibility of the saponified ethylene-vinyl acetate copolymer while upholding its inherent characteristics.

More specifically, the prior art compositions are often used in the form of laminates with a polyolefin or polyester or the like thermoplastic resin. When exposed to a high-temperature high-humidity atmosphere, the laminates in the form of packaging materials for retortable foods, for instance, often undergo decrease in interlayer adhesion, which may lead to the occurrence rence of the phenomenon of peeling or whitening (blushing). Development of improved compositions is strongly demanded.

Further, even if such a laminating procedure is taken, the penetration of moisture from the edge and and corner cannot be precluded, so that the object of the remedial procedure is not fully accomplished.

EP-A-0 440 557 describes a resin composition comprising a saponified ethylene-vinyl acetate copolymer, a polyolefin resin, a graft polymer obtained by the reaction of an unsaturated carboxcylic acid with a polyolefin resin and a further reaction with an oligomer of polyamid and an Al-containing hydrotalcite compound. This resin composition is described as being useful for packing.

EP-A-0 440 558 describes a resin composition comprising a saponified ethylene-vinyl acetate copolymer, a polyolefin resin, a graft polymer obtained by the reaction of an unsaturated carboxylic acid with a polyolefin resin and a further reaction with an oligomer of polyamid and an hydrotalcite compound containing three metal kations. This resin composition is described as being useful for packing.

EP-A-0 444 977 and EP-A-0 440 559 describe a resin composition comprising a saponified ethylene-vinyl acetate

copolymer, a polyolefin resin and a graft polymer obtained by the reaction of a carboxylic acid with a polyolefin resin which is further reacted with a polyamide oligomer, whereby the saponified ethylene-vinyl acetate copolymer and the polyolefin resin have a special ratio of their melt flow indices.

EP-A-0 440 535 describes a resin composition comprising a saponified ethylene-vinyl acetate copolymer, a polyolefin copolymer having a density of 0.9-0.94 g/cm$^3$ and a graft polymer obtained by the reaction of an unsaturated carboxylic acid with a polyolefin resin, which is further reacted with a polyamide oligomer.

EP-A-0 440 560 describes a process for the production of an article with good shock resistance by mixing a saponified ethylene-vinyl acetate copolymer, an ethylene-propylene copolymer and a graft polymer obtained by the reaction of an unsaturated carboxylic acid with a polyolefin resin, which is further reacted with a polyamide oligomer.

The documents EP-A-0 440 557, EP-A-0 440 558, EP-A-0 444 977, EP-A-0 440 559, EP-A-0 440 535 and EP-A-0 440 560 are prior applications in accordance with Article 54(3) EPC.

JP-A-62011748 describes a resin composition comprising a propylene-based resin, an ethylene-vinyl alcohol copolymer and a hydrotalcite-type compound. This resin composition is described to have supressed thermal degradation in moulding and giving a reusable scrap composition.

GB-A-2185986 describes a process for producing a moulded article comprising a mixture of an olefin resin, which includes residual chlorine due to a Ziegler-type catalyst, a hydrolised ethylene-vinyl acetate copolymer and a hydrotalcite compound. It is described that this process can reduce the gel formation and that the long run processability can be increased.

## SUMMARY OF THE INVENTION

The inventors of the present invention made intensive investigations in an attempt to develop a saponified ethylene-vinyl acetate copolymer composition having excellent long run property, stretchability, film forming property, flexibility, and ensuring higher quality characteristics as compared with the conventional compositions, for example markedly improved interlayer adhesion, among others, even in a high-temperature high-humidity atmosphere, with the oxygen barrier property intrinsic of the saponified copolymer being retained at a high level.

As a result, they found that the objects such as mentioned above can be accomplished by a resin composition which comprises

(A) 50 to 99,5 weight % of a saponified ethylene-vinyl acetate copolymer with an ethylene content of 20 to 60 mole % with a degree of saponification of its vinyl acetate component being not less than 95 mole %,
(B) at least 0.4 weight % of a polyolefin resin having a melt flow rate of 0.01 to 100 g/10 minutes determined at 210°C and under a load of 2160 g according to JIS K-6760, and
(C) 0.1 to 15 weight % of a graft polymer obtained by grafting an ethylenically unsaturated carboxylic acid or the corresonding anhydrides or half ester thereof to a polyolefin resin having a degree of polymerization of 350 to 45 000, where the reaction ratio of the polyolefin resin to the ethylenically unsaturated carboxylic acid or the corresonding anhydrides or half ester thereof is 100/0.05 through 100/10 by weight, and reacting the adduct with a polyamide having a degree of polymerization of 100 to 500.

In the above composition, it is preferable to be included a hydrotalcite compound (D) or a hydrotalcite solid solution (D') hereinafter described.

The present invention has been completed based on the above finding.

## DETAILED DESCRIPTION OF THE INVENTION

The present invention will hereinafter be described in detail, with emphasis placed on such composition and, in particular, on uses for shaped articles based thereon.

The saponified ethylene-vinyl acetate copolymer (A) to be employed in accordance with the present invention should have an ethylene content of 20 to 60 mole %, preferably 25 to 55 mole %, with a degree of saponification of its vinyl acetate component being not less than 95 mole %.

With an ethylene content less than 20 mole %, the oxygen barrier property under high-humidity conditions is not as high as desired, while an ethylene content in excess of 60 mole % leads to decreases in oxygen barrier property, printability and other physical properties. When the degree of saponification or hydrolysis is less than 95 mole %, the oxygen barrier property and moisture resistance are sacrificed.

It should be understood that this saponified copolymer may contain small proportions of other comonomer ingredients including α-olefins such as propylene, isobutene, α-octene, α-dodecene or, α-octadecene, unsaturated carboxylic acids or salts thereof, partial alkyl esters, complete alkyl esters, nitriles, amides and anhydrides and unsaturated sulfonic acids or salts thereof.

With regard to the above component (A), its melt flow rate (hereinafter referred to briefly as MFR) $M_1$ as determined at 210°C and under a load of 2160 g according to JIS K-6760 is suitably in the range of 0.1 to 100 g/10 min, preferably 0.5 to 100 g/min, and more preferably 1 to 60 g/10 min.

With regard to the polyolefin resin (B), there may be mentioned linear low-density polyethylene, medium-and high-density polyethylenes, ionomers, ethylene-propylene copolymer, crystalline polypropylene, polybutene or ethylene-vinyl acetate copolymer of comparatively low vinyl acetate content. Particularly, low-, medium- or high-density polyethylene, and isotactic polypropylene are of practical importance.

With regard to (B), its melt flow rate $M_2$ as determined at 210°C and under a load of 2160 g according to JIS K-6760 is in the range of 0.01 to 100 g/10 minutes.

For improving the compatibility among the components of the desired resin composition, incorporation of (C) is essential in the practice of the invention.

The component (C) is a graft polymer obtained by grafting an ethylenically unsaturated carboxylic acid or the corresponding anhydrides or half ester thereof to a polyolefin resin and reacting this carboxylic acid or the corresponding anhydrides or half ester thereof with a polyamide.

This graft polymer is produced by dissolving or suspending a polyolefin resin in an appropriate solvent or putting it in a molten state, activating the polyolefin resin chain with a peroxide or diazo initiator, grafting an ethylenically unsaturated carboxylic acid or the corresponding anhydrides or half ester thereof thereto to give a polymer and mixing this polymer with a polyamide in molten state.

For this reaction, Brabender® machine, Buss® blender, single-screw extruder, or Werner® and Pfleiderer® twin-screw extruder is employed.

The degree of polymerization of the polyolefin resin to be employed is 350 to 45,000 and preferably 500 to 10,000. The melt flow rate (230°C, load 2160 g; the same applies hereinafter) is about 0.1 to 50 g/10 minutes for all practical purposes.

The reaction ratio of the polyolefin resin to the ethylenically unsaturated carboxylic acid or the corresponding anhydrides or half ester thereof is 100/0.05 through 100/10 and preferably 100/0.5 through 100/3 as expressed on the weight basis.

If the ratio is 100/less than 0.05, the improving effect on compatibility will not be sufficient. On the other hand, if the ratio is 100/more than 10, the viscosity will be too high for practical molding.

The degree of polymerization of said polyamide is 100 to 500, for all practical purposes and the reaction ratio is 0.01 to 1 mole and preferably 0.05 to 0.9 mole per mole of the carboxyl group.

As examples of the polyolefin resin, there may be mentioned linear low-density, low-density, medium-density or high-density polyethylene, ionomers, ethylene-propylene copolymer, crystalline polypropylene, polybutene, ethylene-vinyl acetate copolymer or ethylene-propylene copolymer. Important for practical purposes are linear low-density polyethylene, low-density polyethylene, high-density polyethylene, ethylene-propylene copolymer, ethylene-vinyl acetate copolymer and crystalline polypropylene.

The ethylenically unsaturated carboxylic acid or the corresponding anhydrides or half ester thereof to be grafted to such a trunk polymer includes unsaturated carboxylic acids such as acrylic acid, methacrylic acid, crotonic acid, maleic acid, fumaric acid and itaconic acid, and the corresponding anhydrides or half esters.

The polyamide can be prepared by the known methods such as addition polymerization of a lactam, polycondensation of an aminocarboxylic acid or polycondensation of a diamine with a dicarboxylic acid.

Examples of the starting materials for said polyamide are various lactams such as ε-caprolactam, enantholactam, caprylolactam, laurolactam, α-pyrrolidone or α-piperidone, ω-amino acids such as 6-aminocaproic acid, 7-aminoheptanoic acid, 9-amino-nonanoic acid or 11-aminoundecanoic acid, dibasic acids such as adipic acid, glutaric acid, pimellic acid, suberic acid, azelaic acid, sebacic acid, undecadioic acid, dodecadioic acid, hexadecadioic acid, hexadecenedioic acid, eicosadioic acid, eicosadiene-dioic acid, diglycolic acid, 2,2,4-trimethyladipic acid, xylylenedicarboxylic acid, 1,4-cyclohexanedicarboxylic acid, terephthalic acid or isophthalic acid, and diamines such as hexamethylenediamine, tetramethylenediamine, nonamethylenediamine, undecamethylenediamine, dodecamethylenediamine, 2,2,4- (or 2,4,4-)trimethylhexamethylenediamine, bis(4,4'-amino-cyclohexyl)methane or metaxylylenediamine. For molecular weight control, a monoamine such as laurylamine or oleylamine can also be used in an appropriate amount.

In the composition of the present invention, the proportion of (A) should be 50 to 99.5 weight % and preferably 60 to 95 weight %, that of (B) should be at least 0.4 weight % and preferably 4.5 to 35 weight %, and that of (C) should be 0.1 to 15 weight % and preferably 1.5 to 10 weight %.

When the proportion of (A) is less than 50 weight % or that of (B) is over 50 weight %, the oxygen barrier property is adversely affected. Conversely when the proportion of (A) is over 99.5 weight % or that of (B) is less than 0.4 weight %, stretchability and flexibility are sacrificed. When the proportion of (C) is less than 0.1 weight %, the compatibility between (A) and (B) is poor, so that the interlayer adhesion of laminates decreases. Conversely when the proportion of (C) exceeds 15 weight %, long-run moldability is adversely affected.

The component (D) to be employed in accordance with the present invention is a hydrotalcite compound representable by the general formula

$$M_xAl_y(OH)_{2x+3y-2z}(E)_z \cdot aH_2O$$

wherein M is Mg, Ca or Zn, E is $CO_3$ or $HPO_4$, x, y and z each independently is a positive number and a is 0 (zero) or a positive number.

As typical examples of such compound, there may be mentioned the following:

$$Mg_{4.5}Al_2(OH)_{13}CO_3 \cdot 3.5H_2O,$$

$$Mg_5Al_2(OH)_{14}CO_3 \cdot 4H_2O,$$

$$Mg_6Al_2(OH)_{16}CO_3 \cdot 4H_2O,$$

$$Mg_8Al_2(OH)_{20}CO_3 \cdot 5H_2O,$$

$$Mg_{10}Al_2(OH)_{22}(CO_3)_2 \cdot 4H_2O,$$

$$Mg_6Al_2(OH)_{16}HPO_4 \cdot 4H_2O,$$

$$Ca_6Al_2(OH)_{16}CO_3 \cdot 4H_2O$$

and

$$Zn_6Al_6(OH)_{16}CO_3 \cdot 4H_2O.$$

Furthermore, those hydrotalcite compounds derived from $Mg_2Al(OH)_9 \cdot 3H_2O$ by partial substitution of the OH groups thereof by $CO_3$ or $HPO_4$ which cannot be represented by a definite chemical formula and those modifications of talcite compounds such as mentioned above which are derived therefrom by elimination of water of crystallization (a = 0) are expected to be comparable thereto in effect. In particular, those compounds in which M is Mg and E is $CO_3$ can show the most remarkable effect.

The component (D') to be employed in accordance with the present invention is a hydrotalcite solid solution representable by the general formula

$$[(Ma^{2+})_{y1}(Mb^{2+})_{y2}]_{1-x}M^{3+}(OH)_2A_{x/n} \cdot mH_2O$$

wherein $Ma^{2+}$ represents at least one metal selected from among Mg, Ca, Sr and Ba, $Mb^{2+}$ is a metal selected from among Zn, Cd, Pb and Sn, $M^{3+}$ is a trivalent metal, $A^{n-}$ is an anion having a valence of n, and x, y1, y2 and m are respectively positive numbers satisfying the conditions $0 < x \leqq 0.5$, $0.5 < y1 < 1$, $y1 + y2 = 1$, and $0 \leqq m < 2$.

With regard to the above general formula, $Ma^{2+}$ is preferably Mg or Ca and $Mb^{2+}$ is desirably Zn or Cd. Examples of $M^{3+}$ are, Al, Bi, In, Sb, B, Ga and Ti. Among them, Al is suited for practical use.

Useful as $A^{n-}$ are $CO_3^{2-}$ , $OH^-$, $HCO_3^-$ , salicylate ion, citrate ion, tartrate ion, $NO_3^-$, $I^-$, oxalate ion, $[Fe(CN)_6]^{4-}$, $ClO_4^-$ , $CH_3COO^-$ or maleate ion.

The hydrotalcite solid solution may be surface-treated with e.g. a higher fatty acid, anionic surfactant, silane coupling agent, titanate coupling agent, or glycerin fatty acid ester.

Typical examples of (D') are as follows:

$$[Mg_{0.75}Zn_{0.25}]_{0.67}Al_{0.33}(OH)_2(CO_3)_{0.165}\cdot 0.45H_2O$$

$$[Mg_{0.79}Zn_{0.21}]_{0.7}Al_{0.3}(OH)_2(CO_3)_{0.15}$$

$$[Mg_{1/7}Ca_{3/7}Zn_{3/7}]_{0.7}Al_{0.3}(OH)_2\begin{pmatrix}CHCOO\\ \|\\ CHCOO\end{pmatrix}_{0.15}\cdot 0.41H_2O$$

$$[Mg_{6/7}Cd_{1/7}]_{0.7}Al_{0.3}(OH)_2(CH_3COO)_{0.3}\cdot 0.34H_2O$$

$$[Mg_{5/7}Pb_{2/7}]_{0.7}Al_{0.3}(OH)_2(CO_3)_{0.15}\cdot 0.52H_2O$$

$$[Mg_{0.74}Zn_{0.26}]_{0.68}Al_{0.32}(OH)_2(CO_3)_{0.16}$$

$$[Mg_{0.56}Zn_{0.44}]_{0.68}Al_{0.32}(OH)_2(CO_3)_{0.16}\cdot 0.2H_2O$$

$$[Mg_{0.81}Zn_{0.19}]_{0.74}Al_{0.26}(OH)_2(CO_3)_{0.13}$$

$$[Mg_{0.75}Zn_{0.25}]_{0.8}Al_{0.2}(OH)_2(CO_3)_{0.10}\cdot 0.16H_2O$$

$$[Mg_{0.71}Zn_{0.29}]_{0.7}Al_{0.3}(OH)_2(NO_3)_{0.30}$$

$$[Mg_{0.71}Zn_{0.29}]_{0.7}Al_{0.3}(OH)_2\begin{pmatrix}CHCOO\\ \|\\ CHCOO\end{pmatrix}_{0.15}$$

and

$$[Mg_{0.14}Ca_{0.57}Zn_{0.29}]_{0.7}Al_{0.3}(OH)_{2.3}\cdot 0.25H_2O$$

The component (D) or (D') is used in an amount of 0.005 to 5 parts by weight, preferably 0.01 to 1 part by weight, per 100 parts by weight of the sum total of (A) plus (B) plus (C).

When the amount of (D) or (D') is smaller than 0.005 part by weight, the long-run moldability is low while films will have decreased transparency, stretchability and flexibility when said amount exceeds 5 parts by weight.

The component (D) or (D') may be present in any form in the mixture of (A), (B) and (C). The time of addition of (D) or (D') is not critical. It is advantageous, however, to admix (D) or (D') with the polyolefin resin (B) in advance and then blend the masterbatch-like mixture with the components (A) and (C).

While the composition according to the present invention is useful for a variety of applications such as shaped articles, adhesives or coatings, it is most useful for molding purposes and can be molded into pellets, film, sheet, containers, fibers, bars, pipe and other shaped articles by the melt-kneading technique. Such products can be crushed (for reclaiming) or pelleted for re-melt-molding.

For melt-molding of the composition, extrusion molding (e.g. T-die extrusion, inflation molding, blow molding, melt spinning or contour extrusion) and injection molding are mostly employed. The melt-molding temperature is selected in many cases from the range of 170 to 270°C. In addition to the above techniques, two-color molding and injection-blow molding techniques may also be employed and shaped articles with good dimensional tolerances can be manufactured.

In the molding process, it is of course possible to use two or more different saponified ethylene-vinyl acetate copolymers varying in ethylene content and/or in the degree of saponification in combination. In melt-molding, it is also possible to incorporate, besides the above-mentioned saponified ethylene-vinyl acetate copolymer, suitable amounts of additives such as a plasticizer (for example, a polyhydric alcohol), stabilizer, surfactant, crosslinking agent (for example, an epoxy compound, polyvalent metal salt, inorganic or organic polybasic acid or salt thereof), filler, colorant or reinforcing fiber (for example, glass fiber, and carbon fiber). Any other thermoplastic resin may also be incorporated. Such thermoplastic resin includes, polyolefins other than the component (B) mentioned above (linear low-density, low-density or high-density polyethylene, polypropylene, ethylene-propylene copolymer, ethylene-propylene-diene copolymers, copolymers of ethylene and an alpha-olefin containing 4 or more carbon atoms, ethylene-vinyl acetate copolymer, ethylene-acrylate ester copolymers, ionomers, polybutene, and polypentene ), modified polyolefins obtainable by graft-modification of such polyolefins with unsaturated carboxylic acids or derivatives thereof, polyamides, polyvinyl chloride, polyvinylidene chloride, polyesters, polystyrene, polyacrylonitrile, polyurethanes, polyacetal, polycarbonates or melt-moldable polyvinyl alcohol resin.

As mentioned hereinbefore, the composition of the present invention is not only used for the manufacture of a single-layer article solely composed of the composition but also used often as a laminated article including at least one layer of the composition.

The layer of the composition of the present invention shows a characteristically high bonding affinity for the layer material to be laminated therewith. In particular, said bonding affinity can be retained at a high level even under high-temperature high-humidity conditions in retorts.

In the manufacture of a laminated product according to the invention, in which a different material is laminated to one side or either side of a layer of the composition of the invention, the following laminating methods, for instance, can be employed. Thus, the method which comprises melt-extruding a thermoplastic resin onto a film or sheet of the composition of the invention, the method which comprises melt-extruding the composition of the invention onto a substrate made of a thermoplastic resin or some other material, the method which comprises co-extruding the composition of the invention and a different thermoplastic resin, and the method in which a film or sheet of the composition of the invention is laminated to a film or sheet of a different material with a known adhesive such as an organotitanium compound, an isocyanate compound or a polyester compound can be mentioned.

As resins mated with the above composition for co-extrusion, there may be mentioned linear low-density polyethylene, low-density polyethylene, medium-density polyethylene, high-density polyethylene, ethylene-vinyl acetate copolymer, ionomers, ethylene-α-olefin ($C_{3-20}$ α-olefin) copolymers, ethylene-acrylic ester copolymers, polypropylene, propylene-α-olefin ($C_{4-20}$ α-olefin) copolymers, homo- or copolymers of olefins such as polybutene or polypentene, and polyolefin resins in a broad sense as obtainable by modifying such homopolymers or copolymers of olefins by grafting of an unsaturated carboxylic acid or an ester thereof, polyesters, polyamides, copolymerized polyamides, polyvinyl chloride, polyvinylidene chloride, acrylic resins, styrenic resins, vinyl ester resin, polyester elastomers, polyurethane elastomers, chlorinated polyethylene, and chlorinated polypropylene. A saponified ethylene-vinyl acetate copolymer can also be co-extruded.

When a film or sheet or the like shaped article is prepared from the composition of the invention and, then, extrusion-coated with a different material or laminated to a film or sheet of a different material with an adhesive, said different material is not limited to said thermoplastic resins but may be virtually any other material (such as paper, metal foil, uniaxially or biaxially oriented plastic film or sheet, woven fabric, nonwoven fabric, metal filament or wood.

The laminar structure of said laminated product is optional. Thus, a layer of the composition of the invention being designated as A ($A_1$, $A_2$ ...) and a layer of a different material, e.g. a thermoplastic resin, being designated as B ($B_1$, $B_2$, ...), not only a two-layer structure of A/B but a variety of other combinations such as B/A/B, A/B/A, $A_1/A_2/B$, $A/B_1/B_2$, B/A/B or $B_2/B_1/A/B_1/B_2$ can be employed for a film, sheet or bottle, for instance. In the case of a filament, a bimetal-type, core (A) - sheath (B), core (B) - sheath (A), eccentric core-sheath and other combinations of A and B can be adopted.

For co-extrusion, A may be blended with B or vice versa, or for improved interlayer adhesion, a suitable resin may be incorporated in at least one of A and B.

The laminated product may be optionally configured. Thus, film, sheet, tape, bottle, pipe, filament, or modified cross-section extrudate may be mentioned.

The laminated product may, if necessary, be further subjected to a variety of processings, such as heat treatment, cooling, rolling, printing, dry lamination, solution- or melt-coating, bag production, deep-drawing, box-making, tubing or splitting.

The aforementioned shaped articles and laminated products, in particular in the form of film or sheet, can be improved in physical properties by stretching or drafting, if required.

In the present invention, the composition is melt-molded into a film material. The thickness of such film is virtually

optional and may range from a few micrometers (few microns) to several hundred micrometers (several hundred microns). The term 'film' as used in this specification means a film in the broad sense of the term, thus including a sheet, tape, tube or container .

The film obtained in the above manner is conditioned for absorption of moisture or drying, if necessary, and then stretched.

This stretching may be uniaxial or biaxial. The effects of the invention are better materialized when the stretching ratio or draft is as high as possible. In the case of uniaxial stretching, the stretching ratio is preferably at least 1.5 times and, for still better results, not less than 2 times. In the case of biaxial stretching, the stretching ratio is preferably not less than 1.5 times, more desirably not less than 2 times and, for still better results, not less than 4 times on the area basis.

As to the stretching technique that can be employed, there may be mentioned roll stretching, tenter stretching, tubular stretching and stretching blow processes, as well as high-draft deep drawing or vacuum molding. In the case of biaxial stretching, whichever of concurrent biaxial stretching and serial biaxial stretching can be adopted.

The stretching temperature is selected from the range of about 40 to 150°C.

After completion of stretching, the product is thermally set. This thermal setting can be effected by the well-known technique. Thus, with the stretched film being held in taut condition, it is heat-treated at a temperature of 50 to 160°C, preferably at 80 to 160°C for about 2 to 600 seconds.

The resulting oriented film can be subjected to a variety of processings such as cooling, rolling, printing, dry lamination, solution- or melt-coating, bag-making, deep-drawing, box-making, tubing or splitting.

The film, sheet or container obtainable from the composition of the present invention is useful for packaging foodstuffs, pharmaceutical products, industrial chemicals, and agrochemical products.

[Effects]

The composition according to the invention which comprises (A), (B) and (C) is excellent in long run and film forming property and the shaped articles obtained therefrom are characterized by their markedly improved interlayer adhesion, oxygen barrier property, stretchability and flexibility.

EXAMPLES

The following examples are further illustrative of the composition of the present invention. In the following description, all parts and % are by weight unless otherwise indicated.

Preparation of the samples

| Saponified ethylene-vinyl acetate copolymer (A) | | | | |
|---|---|---|---|---|
| Sample | E-1 | E-2 | E-3 | E-4 |
| Ethylene content (mole %) | 30 | 33 | 40 | 45 |
| Degree of saponification of vinyl acetate component (mole %) | 99.4 | 99.1 | 99.6 | 99.7 |

| Polyolefin resin (B) | | |
|---|---|---|
| Sample | MFR (g/10 min.) | Melting point (°C) |
| P-1 Polypropylene | 3 | 166 |
| P-2 Ethylene-propylene block copolymer (Ethylene content 12%) | 5 | 163 |
| P-3 Ethylene-propylene random copolymer (Ethylene content 3%) | 8 | 165 |
| P-4 Polypropylene | 8 | 166 |
| P-5 Linear low-density polyethylene | 4 | 124 |
| P-6 High-density polyethylene | 1.2 | 134 |

Graft polymer (C)

| Sample | | G-1 | G-2 | G-3 | G-4 |
|---|---|---|---|---|---|
| Trunk polymer (a) | | Ethylene-propylene block copolymer (Ethylene content 12%) | Ethylene-propylene random copolymer (Ethylene content 3%) | Medium-density polyethylene | High-density polyethylene |
| MFR (g/10 min.) | | (4.2) | (3.6) | (10.5) | (27) |
| Unsaturated carboxylic acid (b) | | Maleic anhydride | Maleic anhydride | Maleic anhydride | Maleic anhydride |
| Polyamide (c) | | ε-Caprolactam type ($\bar{P}$ : 200) | ε-Caprolactam type ($\bar{P}$ : 500) | Hexamethylene-diamine/adipic acid type ($\bar{P}$ : 500) | ε-Caprolactam type ($\bar{P}$ : 350) |
| Composition ratio | (a)/(b) (weight ratio) | 100/2.1 | 100/2.5 | 100/1.8 | 100/2.9 |
| | (c)/(b) (mole ratio) | 1/2 | 2/2.5 | 1.4/1.8 | 0.9/2.9 |

Hydrotalcite compound (D)

H-1: $Mg_{4.5}Al_2(OH)_{13}CO_3 \cdot 3.5H_2O$
H-2: $Mg_6Al_2(OH)_{16}CO_3 \cdot 4H_2O$
H-3: $Ca_6Al_2(OH)_{16}CO_3 \cdot 4H_2O$
H-4: $Zn_6Al_2(OH)_{16}CO_3 \cdot 4H_2O$

Examples 1 through 10 and Comparative Examples 1 and 2

Laminates having the construction shown below were produced using the compositions comprising a combination of (A), (B), (C) and (D) as specified in Table 1.

Outer layer (I): Polyamide 6.
Intermediate layer (II): Composition according to the invention comprising (A), (B), (C) and (D).
Adhesive layer (III): Maleic anhydride-modified ethylene-vinyl acetate copolymer [MFR: 2.1 g/10 minutes (190°C, 2160 g)].
Inner layer (IV): Ethylene-vinyl acetate copolymer with a vinyl acetate content of 10% [MFR: 2 g/10 minutes (190°C, 2160 g)].
Four-layer laminates with layer thicknesses of (I)/(II)/(III)/(IV)=20/10/5/20 micrometers (20/10/5/20 microns). For stretchability testing, films with layer thicknesses 80/40/20/80 micrometers (80/40/20/80 microns) were used.

Extrusion molding conditions

Extruder:

40 mm-dia. extruder (for inner layer)
40 mm-dia. extruder (for intermediate layer)
30 mm-dia. extruder (for adhesive layer)
40 mm-dia. extruder (for outer layer)

Screw: For each, L/C = 2.8; compression ratio = 3.2 Speed of screw revolution:

| | |
|---|---|
| For inner layer : | 40 rpm |
| For intermediate layer: | 20 rpm |
| For adhesive layer : | 20 rpm |
| For outer layer : | 40 rpm |

Die:
T-Die with a 4-layer combining adapter
Die width: 450 mm Extrusion temperature:
Extruders for inner, outer and adhesive layers

$$C_1 = 190°C, C_2 = 200°C, C_3 = 210°C,$$

$$C_4 = 220°C$$

Extruder for intermediate layer

$$C_1 = 180°C, C_2 = 200°C, C_3 = 220°C,$$

$$C_4 = 220°C$$

Combining adapter: 210°C
T-die : 210°C
The results obtained are shown in Table 1.
The bond strength was measured after retort treatment (120°C x 30 minutes).

The long-run property was evaluated after 96 hours of continuous extrusion molding, followed by disjointing of the extruder, in terms of the state of gel adhesion on the screen mesh as rated on the 5-point scale from 1 (no adhesion) to 5 (adhesion on the whole surface) or the state of adhesion of a scorched or burnt material on the screw surface as rated on the 5-point scale from 1 (no adhesion) to 5 (adhesion on the whole surface).

The oxygen permeability was determined with a MOCON Oxtran® 10/50. The stretchability was evaluated in terms of uneven stretching in simultaneous biaxial stretching (3 x 3 times) at 90°C.

The film impact strength was determined using a film impact tester (impact head diameter 38.1 mm (3/2 inches), 20°C x 65% RH).

The resistance to flexural fatigue was evaluated in terms of the number of bendings until formation of one pinhole (until an abrupt increase in oxygen permeability) with a Gelboflex® tester.

Table 1

| | Material | Blending ratio | | Long-run property (96 hours) | | Oxygen permeability [$cm^3 . 20 \mu m / m^2 . d . bar$] ($cc \cdot 20 \mu / m^2 \cdot day \cdot atm$) 25°C x 75% RH | Physical properties | | | |
|---|---|---|---|---|---|---|---|---|---|---|
| | | E/P/G | Part per 100 parts of E + P + G | Gel on screen mesh | Burnt material on screw | | Stretch-ability | Bond strength g/15 mm | Film impact strength (kg·cm/mm) | Resistance to flexural fatigue (times) |
| 1 | E-1<br>P-1<br>G-2<br>H-1 | 70/25/5 | 0.05 | 1 | 2 | 1.4(1.4) | ◎ | 950 | 150 | 2,500 |
| 2 | E-2<br>P-2<br>G-3<br>H-2 | 80/10/10 | 0.1 | 1 | 1 | 1.0(1.0) | ◎ | 920 | 135 | 2,000 |
| 3 | E-3<br>P-3<br>G-2<br>H-3 | 65/25/10 | 0.1 | 2 | 2 | 1.7(1.7) | ◎ | 860 | 150 | 3,000 |
| 4 | E-4<br>P-4<br>G-3<br>H-4 | 75/20/5 | 0.05 | 1 | 2 | 2.5(2.5) | ◎ | 750 | 165 | 3,500 |
| 5 | E-1<br>P-5<br>G-1<br>H-1 | 75/20/5 | 0.3 | 1 | 1 | 1.1(1.1) | ◎ | 940 | 130 | 3,000 |
| 6 | E-2<br>P-6<br>G-1<br>H-2 | 70/20/10 | 0.15 | 1 | 2 | 1.3(1.3) | o | 890 | 145 | 3,000 |
| 7 | E-3<br>P-1<br>G-1<br>H-1 | 85/10/5 | 0.1 | 1 | 1 | 1.8(1.8) | o | 870 | 135 | 2,000 |
| 8 | E-1<br>P-5<br>G-4<br>H-2 | 80/15/5 | 0.2 | 1 | 2 | 1.1(1.1) | ◎ | 910 | 125 | 4,000 |

Table 1 (continued)

| | | Material | Blending ratio | | Long-run property (96 hours) | | Oxygen permeability [$cm^3 . 20\mu m/m^2 . d . bar$] ($cc \cdot 20\mu/m^2 \cdot day \cdot atm$) 25°C x 75% RH | Physical properties | | | |
|---|---|---|---|---|---|---|---|---|---|---|---|
| | | | E/P/G | Part per 100 parts of E + P + G | Gel on screen mesh | Burnt material on screw | | Stretch-ability | Bond strength g/15 mm | Film impact strength (kg·cm/mm) | Resistance to flexural fatigue (times) |
| ample | 9 | E-2 P-4 G-3 H-1 | 75/25/10 | 0.1 | 1 | 1 | 1.3(1.3) | ◎ | 830 | 150 | 2,500 |
| | 10 | E-3 P-6 G-4 H-2 | 70/25/5 | 0.1 | 2 | 2 | 1.5(1.5) | ○ | 920 | 145 | 2,000 |
| mpara-ve. ample | 1 | E-1 P-1 H-1 | 73.7/26.3 | 0.05 | 1 | 2 | 1.1(1.1) | × | 210 | 45 | 10 |
| | 2 | E-1 P-1 G-1 | 70/25/5 | 0 | 3 | 4 | 1.3(1.3) | △ | 140 | 65 | 400 |

In the above table, evaluation criteria are as follows:
◎ : Very Good ○ : Good △ : Fair × : Bad

Examples 11 through 15

Laminates composed of the five layers mentioned below were produced under the conditions mentioned below.

Inner layer (I) and outer layer (V): Linear low-density polyethylene (MFR 1.5 g/10 minutes, density 0.920)
Adhesive layers (II) and (IV): Maleic anhydride-modified linear low density polyethylene (MFR 2 g/10 minutes)
Intermediate layer (III): Composition according to the invention comprising (A), (B), (C) and (D).
Layer Composition and layer thicknesses (micrometers (microns)): (I)/(II)/(III)/(IV)/(V) = 20/5/10/5/20 (20/5/10/5/20)

For stretchability testing, the layer thicknesses 80/20/40/20/80 (80/20/40/20/80) were used.
Extruder:

40 mm-dia. extruder (for inner and outer layers)
40 mm-dia. extruder (for intermediate layer)
30 mm-dia. extruder (for adhesive layers)

Screw: For each, L/D = 28, compression ratio = 3.2
Speed of screw revolution:

For inner and outer layers: 65 rpm
For intermediate layer: 20 rpm
For adhesive layers: 30 rpm.

Die:

T-Die with a 5-layer combining adapter
Die width: 450 mm

Extrusion temperature:
Extruders for inner, outer and adhesive layers

$$C_1 = 190°C,\ C_2 = 200°C,\ C_3 = 210°C,\ C_4 = 220°C,$$

Extruder for intermediate layer

$$C_1 = 180°C,\ C_2 = 200°C,\ C_3 = 220°C,\ C_4 = 220°C,$$

Combining adapter 210°C
T die 210°C
The results obtained are shown in Table 2.

Table 2

| Example | Material | Blending ratio E/P/G | Blending ratio Part per 100 parts of E + P + G | Long-run property (96 hours) Gel on screen mesh | Long-run property (96 hours) Burnt material on screw | Oxygen permeability [$cm^3.20\mu m/m^2.d.bar$] ($cc \cdot 20\mu/m^2 \cdot day \cdot atm$) 25°C x 75% RH | Physical properties Stretch-ability | Physical properties Bond strength g/15 mm | Physical properties Film impact strength (kg·cm/mm) | Physical properties Resistance to flexural fatigue (times) |
|---|---|---|---|---|---|---|---|---|---|---|
| 11 | E-1 P-1 G-2 H-1 | 70/25/5 | 0.05 | 1 | 1 | 1.4(1.4) | ◎ | 980 | 150 | 2,000 |
| 12 | E-2 P-2 G-3 H-2 | 80/10/10 | 0.1 | 1 | 1 | 1.2(1.2) | ◎ | 880 | 175 | 3,500 |
| 13 | E-3 P-3 G-2 H-3 | 65/25/10 | 0.1 | 1 | 2 | 1.7(1.7) | ◎ | 940 | 155 | 4,000 |
| 14 | E-4 P-4 G-3 H-4 | 75/20/5 | 0.05 | 1 | 2 | 2.7(2.7) | ◎ | 890 | 160 | 3,000 |
| 15 | E-1 P-5 G-1 H-1 | 75/20/5 | 0.3 | 1 | 1 | 1.0(1.0) | ◎ | 970 | 170 | 2,500 |

In the above table, evaluation criteria are as follows:
◎ : Very Good ○ : Good △ : Fair × : Bad

Examples 16 through 25 and Comparative Examples 3 and 4

Using the following hydrotalcite solid solution, a four layer laminate was produced in the same manner as Examples 1 through 10. The results are set force in Table 3.

Hydrotalcite solid solution (D')

H'-1: $[Mg_{0.75}Zn_{0.25}]_{0.67}Al_{0.33}(OH)_2(CO_3)_{0.165}\cdot 0.45H_2O$

H'-2: $[Mg_{6/7}Cd_{1/7}]_{0.7}Al_{0.3}(OH)_2(CH_3COO)_{0.3}\cdot 0.34H_2O$

$$H'\text{-}3:\ [Mg_{1/7}Ca_{3/7}Zn_{3/7}]_{0.7}Al_{0.3}(OH)_2\begin{pmatrix} CHCOO \\ \| \\ CHCOO \end{pmatrix}_{0.15}\cdot 0.41H_2O$$

H'-4: $[Mg_{5/7}Pb_{2/7}]_{0.7}Al_{0.3}(OH)_2(CO_3)_{0.15}\cdot 0.52H_2O$

Table 3

| No. | Material | Blending ratio | | Long-run property (96 hours) | | Physical properties | | | | |
|---|---|---|---|---|---|---|---|---|---|---|
| | | E/P/G | Part per 100 parts of E + P + G | Gel on screen mesh | Burnt material on screw | Oxygen permeability [$cm^3 . 20 \mu m/m^2 . d.bar$] ($cc \cdot 20 \mu /m^2 \cdot day \cdot atm$) 25°C x 75% RH | Stretch-ability | Bond strength g/15 mm | Film impact strength (kg·cm/mm) | Resistance to flexural fatigue (times) |
| 16 | E-1<br>P-1<br>G-2<br>H'-1 | 70/25/5 | 0.05 | 1 | 2 | 1.0(1.0) | ◎ | 900 | 150 | 2,500 |
| 17 | E-2<br>P-2<br>G-3<br>H'-2 | 80/10/10 | 0.1 | 1 | 1 | 1.2(1.2) | ◎ | 850 | 130 | 1,500 |
| 18 | E-3<br>P-3<br>G-2<br>H'-3 | 65/25/10 | 0.1 | 2 | 2 | 2.1(2.1) | ◎ | 920 | 155 | 2,000 |
| 19 | E-4<br>P-4<br>G-3<br>H'-4 | 75/20/5 | 0.05 | 1 | 2 | 2.1(2.1) | ◎ | 780 | 160 | 2,500 |
| 20 | E-1<br>P-5<br>G-1<br>H'-1 | 75/20/5 | 0.3 | 1 | 1 | 1.3(1.3) | ◎ | 910 | 145 | 3,000 |
| 21 | E-2<br>P-6<br>G-1<br>H'-2 | 70/20/10 | 0.15 | 1 | 2 | 1.5(1.5) | ○ | 840 | 125 | 2,500 |
| 22 | E-3<br>P-1<br>G-1<br>H'-1 | 85/10/5 | 0.1 | 1 | 1 | 1.6(1.6) | ○ | 890 | 125 | 3,000 |
| 23 | E-1<br>P-5<br>G-4<br>H'-2 | 80/15/5 | 0.2 | 1 | 2 | 1.3(1.3) | ◎ | 840 | 140 | 2,500 |

Table 3 (continued)

| | | Material | Blending ratio | | Long-run property (96 hours) | | Oxygen permeability [$cm^3 .20\mu m/m^2 .d.bar$] | Physical properties | | | |
|---|---|---|---|---|---|---|---|---|---|---|---|
| | | | E/P/G | Part per 100 parts of E + P + G | Gel on screen mesh | Burnt material on screw | (cc·20μ/m²·day·atm) 25°C x 75% RH | Stretch-ability | Bond strength g/15 mm | Film impact strength (kg·cm/mm) | Resistance to flexural fatigue (times) |
| Example | 24 | E-2 P-4 G-3 H'-1 | 75/25/10 | 0.1 | 1 | 1 | 1.1(1.1) | ◎ | 860 | 155 | 2,500 |
| Example | 25 | E-3 P-6 G-4 H'-2 | 70/25/5 | 0.1 | 2 | 2 | 1.7(1.7) | ○ | 950 | 160 | 2,000 |
| Comparative Example | 3 | E-1 P-1 H'-1 | 73.7/26.3 | 0.05 | 1 | 2 | 1.3(1.3) | × | 180 | 40 | 10 |
| Comparative Example | 4 | E-1 P-1 G-1 | 70/25/5 | 0 | 3 | 4 | 1.6(1.6) | △ | 120 | 45 | 300 |

In the above table, evaluation criteria are as follows:
◎ : Very Good ○ : Good △ : Fair × : Bad

Examples 26 through 30

A five-layer laminate was produced in the same manner as Examples 11 through 15. The results are set force in Table 4.

Table 4

| | Material | Blending ratio | | Long-run property (96 hours) | | Oxygen permeability [$cm^3 \cdot 20\mu m/m^2 \cdot d \cdot bar$] | Physical properties | | | |
|---|---|---|---|---|---|---|---|---|---|---|
| | | E/P/G | Part per 100 parts of E + P + G | Gel on screen mesh | Burnt Material on screw | ($cc \cdot 20\mu/m^2 \cdot day \cdot atm$) 25°C x 75% RH | Stretch-ability | Bond strength g/15 mm | Film impact strength ($kg \cdot cm/mm$) | Resistance to flexural fatigue (times) |
| 26 | E-1 P-1 G-2 H'-1 | 70/25/5 | 0.05 | 1 | 1 | 1.2(1.2) | ◎ | 1,150 | 165 | 3,000 |
| 27 | E-2 P-2 G-3 H'-2 | 80/10/10 | 0.1 | 1 | 1 | 1.1(1.1) | ◎ | 1,000 | 170 | 3,500 |
| 28 | E-3 P-3 G-2 H'-3 | 65/25/10 | 0.1 | 1 | 2 | 2.2(2.2) | ◎ | 1,100 | 155 | 2,500 |
| 29 | E-4 P-4 G-3 H'-4 | 75/20/5 | 0.05 | 1 | 2 | 2.1(2.1) | ◎ | 980 | 170 | 3,000 |
| 30 | E-1 P-5 G-1 H'-1 | 75/20/5 | 0.3 | 1 | 1 | 1.4(1.4) | ◎ | 1,000 | 175 | 2,500 |

In the above table, evaluation criteria are as follows:
◎ : Very Good ○ : Good △ : Fair × : Bad

Examples 31 through 38 and Comparative Examples 5 to 10

Pellets of the composition of (A), (B) and (C) were mixed in a Henschel® mixer and fed to a T-die extrusion machine for melt-kneading and extrusion from the T-die to produce a 30µm (30 µ)-thick film. (In the evaluation of stretchability, a 180 µm (180 µ)-thick film was used.)

The extrusion molding conditions were as follows.

Extruder: 40 mm-dia. extruder
Screw : Dulmage head type, L/D = 28, CR = 3
Extrusion temperature : 230°C
RPM of screw: 40 rpm

The data on the film are presented in Table 5.

Preparation of the samples

| Saponified ethylene-vinyl acetate copolymer (A) | | | | |
|---|---|---|---|---|
| Sample | E-5 | E-6 | E-7 | E-8 |
| Ethylene content (mole %) | 30 | 33 | 40 | 45 |
| Degree of saponification of vinyl acetate component (mole %) | 99.4 | 99.1 | 99.6 | 99.7 |
| Melt flow rate (g/10 min.) | 3.8 | 5.5 | 7.2 | 12.5 |

| Polyolefin resin (B) | | |
|---|---|---|
| Sample | Density (g/cm$^3$) | Melt flow rate (g/10 min.) |
| P-7 Low density polyethylene | 0.924 | 6 |
| P-8 Linear low-density polyethylene | 0.920 | 2.1 |
| P-9 Ethylene-vinyl acetate (15%) | 0.934 | 14 |

Graft polymer (C)

| Sample | | G-5 | G-6 | G-7 | G-8 |
|---|---|---|---|---|---|
| Trunk polymer (a) MFR (g/10 min.) | | Linear low-density polyethylene (12.5) | Linear low-density polyethylene (7.8) | Ethylene-vinyl acetate(12%) copolymer (4.5) | Ethylene(12%)-propylene co-polymer (8.0) |
| Unsaturated carboxylic acid (b) | | Maleic anhydride | Maleic anhydride | Maleic anhydride | Maleic anhydride |
| Polyamide (c) | | ε-Caprolactam type ($\bar{P}$ : 350) | ε-Caprolactam type oligomer ($\bar{P}$ : 400) | Hexamethylene-diamine/adipic acid type ($\bar{P}$ : 450) | ε-Caprolactam type ($\bar{P}$ : 450) |
| Compo-sition ratio | (a)/(b) (weight ratio) | 100/2.1 | 100/2.5 | 100/1.8 | 100/2.9 |
| | (c)/(b) (mole ratio) | 1/2 | 2/2.5 | 1.4/1.8 | 0.9/2.9 |

Table 5

| | | Material | Blending ratio E/P/G | Physical properties: Oxygen permeability [$cm^3 . 20\mu m/m^2 . d.bar$] ($cc \cdot 20\mu/m^2 \cdot day \cdot atm$) 25°C x 75% RH | Stretchability 5x5 | Stretchability 7x7 | Impact strength (kg·cm/mm) | Film thickness stability |
|---|---|---|---|---|---|---|---|---|
| Example | 31 | E-5 P-7 G-5 | 70/25/5 | 1.1 (1.1) | ◎ | ○ | 100 | ◎ |
| | 32 | E-6 P-8 G-6 | 75/15/10 | 1.3 (1.3) | ◎ | ◎ | 105 | ◎ |
| | 33 | E-7 P-9 G-7 | 85/10/5 | 1.6 (1.6) | ◎ | ○ | 135 | ◎ |
| | 34 | E-8 P-7 G-8 | 85/10/5 | 2.5 (2.5) | ◎ | ○ | 160 | ◎ |
| | 35 | E-5 P-8 G-5 | 70/20/10 | 1.0 (1.0) | ◎ | ◎ | 110 | ◎ |
| | 36 | E-6 P-8 G-6 | 80/12.5/7.5 | 1.4 (1.4) | ◎ | ○ | 120 | ◎ |
| | 37 | E-7 P-7 G-6 | 75/15/10 | 1.5 (1.5) | ○ | ○ | 140 | ◎ |
| | 38 | E-8 P-8 G-5 | 80/15/5 | 2.8 (2.8) | ◎ | ○ | 125 | ◎ |
| Comparative Example | 5 | E-5 P-7 | 74/26 | 1.0 (1.0) | x | x | 35 | x |
| | 6 | E-5 P-7 G-5 | 99.6/0.3/0.1 | 0.9 (0.9) | x | x | 60 | ◎ |
| | 7 | " | 40/50/10 | 405(410) | ◎ | ◎ | 130 | Δ |
| | 8 | " | 55/20/25 | 44(45) | ◎ | ◎ | 135 | Δ |
| | 9 | " | 74/25.95/0.05 | 1.0 (1.0) | x | x | 40 | x |
| | 10 | E-5 P-7 PO | 70/25/5 | 1.3 (1.3) | x | x | 35 | x |

In the above table, PO represents a medium-density polyethylene with a density of 0.955 $g/cm^3$.

In the above table, evaluation criteria are as follows:
◎ : Very Good ○ : Good Δ : Fair × : Bad

Examples 39 through 43

Outer layer (I): Nylon 6 [MFR : 4 g/10 min. (230°C, 2160 g)]
Intermediate layer (II): The composition of (A), (B) and (C) according to the invention
Adhesive layer (III): Maleic anhydride-modified ethylene-vinyl acetate copolymer [MFR : 2.5 g/10 min. (190°C and 2160 g)]

Inner layer (IV): An ethylene-vinyl acetate(10%) copolymer
[MFR : 2 g/10 min. (190°C, 2160 g)]

Using the above resin materials, a four-layer laminate of the construction and film thicknesses (μ) (I)/(II)/(III)/(IV) = 20/10/5/20 was fabricated under the following conditions. (In the stretching test, however, a sheet of 80/40/20/80 was used.)

Molding conditions

Extrusion machines

40 mm-dia. extruder (for inner layer)
40 mm-dia. extruder (for intermediate layer)
30 mm-dia. extruder (for adhesive layer)
40 mm-dia. extruder (for outer layer)

Screw: all L/D = 28, compression ratio 3.2
RPM of screw:

40 rpm for inner layer
20 rpm for intermediate layer
20 rpm for adhesive layer
40 rpm for outer layer

Die:

A T-die with a 4-layer combining adapter
Die width: 450 mm

Extrusion temperature: Extruders for inner, outer and adhesive layers

$C_1$ = 190°C $C_2$ = 200°C

$C_3$ = 210°C $C_4$ = 220°C

Extruder for intermediate layer

$C_1$ = 180°C $C_2$ = 200°C

$C_3$ = 220°C $C_4$ = 220°C

Combining adapter 210°C T-die 210°C

The results are set forth in Table 6.

Table 6

| | | Material | Blending ratio E/P/G | Physical properties | | | |
|---|---|---|---|---|---|---|---|
| | | | | Oxygen permeability [$cm^3$.20μm/ $m^2$.d.bar] (cc·20μ/ $m^2$·day·atm) | Stretchability | Impact Strength (kg·cm/mm) | Interlayer bond strength (g/15 mm) |
| | | | | 25°C x 75% RH | | | |
| Example | 39 | E-5<br>P-7<br>G-5 | 70/20/10 | 1.2 (1.2) | ◎ | 160 | 1000 |
| | 40 | E-6<br>P-8<br>G-6 | 80/12/3 | 1.0 (1.0) | ◎ | 135 | 880 |
| | 41 | E-7<br>P-9<br>G-7 | 85/10/5 | 1.9 (1.9) | ◎ | 135 | 840 |
| | 42 | E-8<br>P-7<br>G-8 | 70/25/5 | 2.7 (2.7) | ◎ | 150 | 890 |
| | 43 | E-5<br>P-8<br>G-5 | 75/15/10 | 1.1 (1.1) | ◎ | 170 | 950 |

In the above table, evaluation criteria are as follows:
◎: Very Good O : Good Δ : Fair × : Bad

Examples 44 through 48

Inner layer (I) and outer layer (V): low-density polyethylene (MFR : 2.0 g/10 min.)
Adhesive layers (II) and (IV): Maleic anhydride-modified linear low-density polyethylene (MFR : 2 g/10 min.)
Intermediate layer (III): The composition of (A), (B) and (C) according to the invention

Using the above resin materials, a five-layer laminate of the construction and film thicknesses (μm(μ)) (I)/(II)/(III)/(IV)/(V) = 20/5/10/5/20 (20/5/10/5/20) was fabricated under the following conditions. (In the stretching test, however, a film of 80/20/40/20/80 (μ) was used.)

Extrusion machines:

40 mm-dia. extruder (for inner and outer layers)
40 mm-dia. extruder (for intermediate layer)
30 mm-dia. extruder (for adhesive layers)

Screw: all L/D = 2.8, compression ratio 3.2
RPM of screw:

65 rpm for inner and outer layers

20 rpm for intermediate layer
30 rpm for adhesive layers

Die:

A T-die with a 5-layer combining adapter
Die width: 1200 mm

Extrusion temperature: Extruders for inner, outer and adhesive layers

$C_1$ = 190°C $C_2$ = 200°C

$C_3$ = 210°C $C_4$ = 220°C

Extruder for intermediate layer

$C_1$ = 180°C $C_2$ = 200°C

$C_3$ = 220°C $C_4$ = 220°C

Combining adapter 220°C T-die 210°C
The results are set forth in Table 7.

Table 7

| | | Material | Blending ratio E/P/G | Physical properties | | | |
|---|---|---|---|---|---|---|---|
| | | | | Oxygen permeability [$cm^3$.20µm/ $m^2$.d.bar] (cc·20µ/ $m^2$·day·atm) | Stretchability | Impact Strength (kg·cm/mm) | Interlayer bond strength (g/15 mm) |
| | | | | 25°C x 75% RH | | | |
| Example | 44 | E-5 P-7 G-5 | 72/20/5 | 1.9 (1.9) | ◎ | 110 | 1080 |
| | 45 | E-6 P-8 G-6 | 85/5/10 | 1.3 (1.3) | ◎ | 95 | 1020 |
| | 46 | E-7 P-9 G-7 | 75/15/10 | 2.1 (2.1) | ◎ | 105 | 950 |
| | 47 | E-8 P-7 G-8 | 70/20/10 | 3.2 (3.2) | ◎ | 115 | 990 |
| | 48 | E-5 P-8 G-5 | 90/5/5 | 1.1 (1.1) | ◎ | 90 | 830 |

In the above table, evaluation criteria are as follows:
◎: Very Good   O : Good   Δ : Fair   X : Bad

Examples 49 through 58 and Comparative Examples 11 through 16

Pellets of the composition of (A), (B) and (C) were mixed in a Henschel® mixer and fed to a T-die extrusion machine for melt-kneading and extrusion from the T-die to produce a 20 µm (20 µ)-thick film. (In the evaluation of stretchability, a 180µm (180µ)-thick film was used.)

The extrusion molding conditions were as follows.

Extruder: 40 mm-dia. extruder

Screw : Full-flight type, L/D = 28, CR = 3

Extrusion temperature (°C):

$$C_1/C_2/C_3/C_4/H/D_1/D_2 = 170/200/220/220/220/210/210$$

RPM of screw: 30 rpm

The data on the film are presented in Table 8.

Preparation of the samples

| Saponified ethylene-vinyl acetate copolymer (A) | | | | |
|---|---|---|---|---|
| Sample | E-9 | E-10 | E-11 | E-12 |
| Ethylene content (mole %) | 30 | 33 | 40 | 45 |
| Degree of saponification of vinyl acetate component (mole %) | 99.8 | 99.3 | 99.5 | 99.6 |
| Melt flow rate (g/10 min.) | 2 | 3.5 | 15 | 5 |

| Polyolefin resin (B) | | |
|---|---|---|
| Sample | MFR (g/10 min.) | Melting point (°C) |
| P-11 Polypropylene | 7 | 168 |
| P-12 Ethylene-propylene block copolymer (Ethylene content 12%) | 20 | 160 |
| P-13 Ethylene-propylene random copolymer (Ethylene content 3%) | 44 | 150 |
| P-14 Polypropylene | 66 | 167 |
| P-15 Medium-density polyethylene | 50 | 121 |
| P-16 High-density polyethylene | 23 | 124 |

Table 8

| | No. | Material Type | $M_2/M_1$ | Blending ratio E/P/G | Oxygen permeability [$cm^3.20\mu m/m^2.d.bar$] (cc·20μ /$m^2$·day·atm) 25°C x 75% RH | Oxygen permeability 20°C x 100% RH | Stretchability | Impact strength (kg·cm/mm) |
|---|---|---|---|---|---|---|---|---|
| Example | 49 | E-9 P-11 G-1 | 3.5 | 90/5/5 | 0.8(0.8) | 16.1(16.3) | O | 110 |
| | 50 | E-10 P-12 G-2 | 5.7 | 60/25/15 | 1.2(1.2) | 9.4(9.5) | O | 170 |
| | 51 | E-11 P-15 G-3 | 3.3 | 80/15/5 | 1.7(1.7) | 8.2(8.3) | O | 135 |
| | 52 | E-12 P-16 G-4 | 4.6 | 80/18/2 | 2.7(2.7) | 7.7(7.8) | O | 135 |
| | 53 | E-9 P-13 G-2 | 22 | 75/20/5 | 0.9(0.9) | 17.1(17.3) | O | 130 |
| | 54 | E-10 P-14 G-1 | 18.9 | 85/5/10 | 1.1(1.1) | 8.3(8.4) | O | 120 |
| | 55 | E-11 P-14 G-2 | 4.4 | 70/15/15 | 1.6(1.6) | 14.1(14.3) | O | 145 |
| | 56 | E-12 P-14 G-2 | 13.2 | 95/4/1 | 2.2(2.2) | 13.1(13.3) | O | 130 |
| | 57 | E-9 P-11 G-2 | 3.5 | 75/10/15 | 1.0(1.0) | 20.6(20.9) | O | 155 |
| | 58 | E-12 P-12 G-1 | 4 | 75/20/5 | 2.3(2.3) | 7.9(8.0) | O | 160 |
| Control Example | 11 | E-9 P-11 | 3.5 | 94/6 | 0.8(0.8) | 43.7(44.3) | × | 55 |
| | 12 | E-9 P-11 G-1 | 3.5 | 99.6/0.3/0.1 | 0.6(0.6) | 48.9(49.5) | △ | 55 |
| | 13 | 〃 | 〃 | 40/50/10 | 405(410) | 425(430) | ○ | 170 |
| | 14 | 〃 | 〃 | 55/20/25 | 44(45) | 71.2(72.1) | △ | 150 |
| | 15 | 〃 | 〃 | 74/25.95/0.05 | 1.2(1.2) | 47.7(48.3) | × | 70 |
| | 16 | E-12 P-11 G-2 | 1.4 | 90/5/5 | 1.1(1.1) | 49.7(50.3) | × | 145 |

In the above table, evaluation criteria are as follows:
**O** : Very Good ○ : Good △ : Fair × : Bad

(Determination of physical properties)

Oxygen permeability: Determined with a MOCON Oxtran® 10/50.

Stretchability: Evaluated in terms of uneven stretching in concurrent biaxial stretching (5 x 5 times and 7 x 7 times) at 90°C

Impact strength: Determined with a film impact tester, impact head diameter 3/2 μ inch, 20°C x 65% RH

Examples 59 through 63

Outer layer (I): Nylon 6® [MFR : 4 g/10 min. (230°C, 2160 g)]
Intermediate layer (II): The composition of (A), (B) and (C) according to the invention
Adhesive layer (III): Maleic anhydride-modified polypropylene [MFR : 5.7 g/10 min. (230°C and 2160 g)]
Inner layer (IV): An ethylene-propylene random copolymer with an ethylene content of 4 mole % [MFR : 8 g/10 min. (230°C, 2160 g)]

Using the above resin materials, a four-layer laminate of the construction and film thicknesses (µm(µ)) (I)/(II)/(III)/(IV)=20/10/5/20 (20/10/5/20) was fabricated under the following conditions. (In the stretching test, however, a sheet of 80/40/20/80 (80/40/20/80) was used.)

Molding conditions

Extrusion machines

60 mm-dia. extruder (for inner layer)
40 mm-dia. extruder (for intermediate layer)
35 mm-dia. extruder (for adhesive layer)
60 mm-dia. extruder (for outer layer)

Screw: all L/D = 28, compression ratio 3.
RPM of screw:

30 rpm for inner layer
30 rpm for intermediate layer
20 rpm for adhesive layer
30 rpm for outer layer

Die:

A T-die with a 4-layer combining adapter
Die width: 600 mm

Extrusion temperature: Extruders for inner, outer and adhesive layers

$C_1$ = 180°C $C_2$ = 210°C

$C_3$ = 230°C $C_4$ = 230°C

Extruder for intermediate layer

$C_1$ = 180°C $C_2$ = 200°C

$C_3$ = 220°C $C_4$ = 220°C

Combining adapter 220°C T-die 210°C

The results are set forth in Table 9.

Table 9

| | | Material | | Blending ratio E/P/G | Oxygen permeability [$cm^3 .20\mu m/m^2 .d.bar$] ($cc \cdot 20\mu/m^2 \cdot day \cdot atm$) | | Physical properties | | |
|---|---|---|---|---|---|---|---|---|---|
| | | Type | $M_2/M_1$ | | 25°C x 75% RH | 20°C x 100% RH | Stretch-ability | Appearance of film after retort treatment | Bond strength (g/15 mm) |
| Example | 59 | E-9 P-11 G-1 | 3.5 | 75/10/15 | 1.1(1.1) | 25.3(25.6) | ◎ | Not whitened | Inseparable |
| | 60 | E-10 P-12 G-2 | 5.7 | 95/4/1 | 0.9(0.9) | 12.6(12.8) | ◎ | Not whitened | 1650 |
| | 61 | E-11 P-15 G-3 | 3.3 | 87/10/3 | 1.7(1.7) | 11.4(11.5) | ◎ | Not whitened | Inseparable |
| | 62 | E-12 P-16 G-4 | 4.6 | 80/10/10 | 2.7(2.7) | 8.8(8.9) | ◎ | Not whitened | Inseparable |
| | 63 | E-9 P-14 G-1 | 33 | 75/10/15 | 1.0(1.0) | 18.3(18.5) | ◎ | Not whitened | Inseparable |

Bond strength: The T-peeling strength between composition layer and resin layer [between (II) and (III)] was measured (pulling speed 300 mm/min., 20°C x 65% RH, 15 mm wide)

Retort treatment: The appearance of the film after 30 minutes' retort treatment at 120°C.

In the above table, evaluation criteria are as follows:
◎ : Very Good ○ : Good △ : Fair × : Bad

Examples 64 through 68

Inner layer (I) and outer layer (V): low-density polyethylene [MFR : 16 g/10 min. (190°C, 2160 g)]
Adhesive layers (II) and (IV): Maleic anhydride-modified ethylene-vinyl acetate copolymer [MFR : 2 g/10 min. (190°C, 2160 g)]
Intermediate layer (III): The composition of (A), (B) and (C) according to the invention

Using the above resin materials, a five-layer laminate of the construction and film thicknesses (µm (µ)) (I)/(II)/(III) /(Iv)/(V) = 20/5/10/5/20 (20/5/10/5/20)) was fabricated under the following conditions. (In the stretching test, however, a film of 80/20/40/20/80 (80/20/40/20/80) (µm (µ)) was used.)

Extrusion machines:

60 mm-dia. extruder (for inner layer)
40 mm-dia. extruder (for intermediate layer)
40 mm-dia. extruder (for adhesive layers)
60 mm-dia. extruder (for outer layer)

Screw: all L/D = 30, compression ratio 2.8
RPM of screw:

50 rpm for inner layer
40 rpm for intermediate layer
40 rpm for adhesive layers
50 rpm for outer layer

Die:

A T-die with a 5-layer combining adapter
Die width: 1200 mm

Extrusion temperature: Extruders for inner, outer and adhesive layers

$C_1$ = 170°C $C_2$ = 200°C

$C_3$ = 220°C $C_4$ = 220°C

Extruder for intermediate layer

$C_1$ = 180°C $C_2$ = 200°C

$C_3$ = 220°C $C_4$ = 220°C

Combining adapter 220°C T-die 210°C
The results are set forth in Table 10.

Table 10

| | | Material Type | $M_2/M_1$ | Mixing ratio E/P/G | Oxygen permeability $[cm^3 \cdot 20\mu m/m^2 \cdot d \cdot bar]$ (cc·20μ/m²·day·atm) 25°C x 75% RH | 20°C x 100% RH | Physical properties Stretch-ability | Pinhole resistance | Bond strength (g/15 mm) |
|---|---|---|---|---|---|---|---|---|---|
| Example | 64 | E-9<br>P-11<br>G-1 | 3.5 | 90/5/5 | 1.1(1.1) | 18.0(18.1) | ◎ | 2,500 | 1,450 |
| | 65 | E-10<br>P-12<br>G-2 | 5.7 | 60/25/15 | 1.6(1.6) | 10.1(10.2) | ◎ | ≧ 4,000 | Inseparable |
| | 66 | E-11<br>P-15<br>G-3 | 3.3 | 80/15/5 | 1.7(1.7) | 10.0(10.1) | ◎ | 3,500 | Inseparable |
| | 67 | E-12<br>P-16<br>G-4 | 4.6 | 80/18/2 | 2.5(2.5) | 11.2(11.3) | ◎ | ≧ 4,000 | Inseparable |
| | 68 | E-9<br>P-13<br>G-2 | 22 | 75/20/5 | 1.2(1.2) | 20.1(20.4) | ◎ | 3,500 | Inseparable |

Bond strength: The interlayer bond strength between (I) and (III) was measured under the same conditions as in Example 10.

Pinhole resistance: The number of cycles till development of pinholes was determined with a Gelhoflex® tester [440° twist 88.9 mm (3.5 inches)) + linear (63.5 mm (2.5 inches))]

**In the above table, evaluation criteria are as follows:**
**◎ : Very Good ○ : Good △ : Fair × : Bad**

## Claims

1. A resin composition which comprises

(A) 50 to 99,5 weight % of a saponified ethylene-vinyl acetate copolymer with an ethylene content of 20 to 60 mole % with a degree of saponification of its vinyl acetate component being not less than 95 mole %,
(B) at least 0.4 weight % of a polyolefin resin having a melt flow rate of 0.01 to 100 g/10 minutes determined at 210°C and under a load of 2160 g according to JIS K-6760, and
(C) 0.1 to 15 weight % of a graft polymer obtained by grafting an ethylenically unsaturated carboxylic acid or the corresonding anhydrides or half ester thereof to a polyolefin resin having a degree of polymerization of 350 to 45 000, where the reaction ratio of the polyolefin resin to the ethylenically unsaturated carboxylic acid or the corresponding anhydrides or half ester thereof is 100/0.05 through 100/10 by weight, and reacting the adduct with a polyamide having a degree of polymerization of 100 to 500.

2. The composition of claim 1, further comprising
(D) a hydrotalcite compound represented by the general formula

$$M_xAl_y(OH)_{2x+3y-2z}(E)_z \cdot aH_2O$$

wherein M is Mg, Ca or Zn, E is $CO_3$ or $HPO_4$, x, y and z each independently is a positive number and a is 0 (zero) or a positive number.

3. The composition of claim 1, further comprising
(D') a hydrotalcite solid solution represented by the general formula

$$[(Ma^{2+})_{y1}(Mb^{2+})_{y2}]_{1-x}M^{3+}(OH)_2A_{x/n} \cdot mH_2O$$

wherein $Ma^{2+}$ represents at least one metal selected from among Mg, Ca, Sr and Ba, $Mb^{2+}$ is a metal selected from among Zn, Cd, Pb and Sn, $M^{3+}$ is a trivalent metal, $A^{n}$- is an anion having a valence of n, and x, y1, y2 and m are respectively positive numbers satisfying the conditions $0 < x \leqq 0.5$, $0.5 < yl < 1$, $y1 + y2 = 1$, and $0 \leqq m < 2$.

4. A shaped article obtained by melt-molding a composition as claimed in any of claims 1 to 3.

5. A laminated article at least one layer of which is comprised of a composition as claimed in any of claims 1 to 3.

6. A shaped article as claimed in claim 4 or a laminated article as claimed in claim 5 which is at least uniaxially oriented.

## Patentansprüche

1. Eine Harzzusammensetzung, die umfaßt

(A) 50 bis 99,5 Gew.-% eines verseiften Ethylen-Vinylacetat-Copolymers mit einem Ethylengehalt von 20 bis 60 Mol-% mit einem Verseifungsgrad der Vinylacetat-Komponente von nicht weniger als 95 Mol-%,
(B) mindestens 0,4 Gew.-% eines Polyolefinharzes mit einer Schmelzflußrate von 0,01 bis 100 g/10 Minuten, bestimmt bei 210°C und unter einer Belastung von 2160 g entsprechend JIS K-6760, und
(C) 0,1 bis 15 Gew.-% eines Pfropfpolymers, erhalten durch Aufpropfen einer ethylenisch ungesättigten Carbonsäure oder der entsprechenden Anhydride oder Halbester davon auf ein Polyolefinharz mit einem Polymerisationsgrad von 350 bis 45 000, wobei das Reaktionsverhältnis des Polyolefinharzes zur ethylenisch ungesättigten Carbonsäure oder der entsprechenden Anhydride oder Halbester davon 100/0,05 bis 100/10 nach Gewicht beträgt, und Umsetzen des Addukts mit einem Polyamid mit einem Polymerisationsgrad von 100 bis 500.

2. Die Zusammensetzung aus Anspruch 1, darüber hinaus umfassend (D) eine durch die allgemeine Formel

$$M_xAl_y\,(OH)_{2x+3y-2z}(E)_z\cdot aH_2O$$

dargestellte Hydrotalcit-Verbindung, wobei M Mg, Ca oder Zn ist, E $CO_3$ oder $HPO_4$ ist, x, y und z jeweils unabhängig voneinander eine positive Zahl sind und a 0 (Null) oder eine positive Zahl ist.

**3.** Die Zusammensetzung aus Anspruch 1, darüber hinaus umfassend (D') eine durch die allgemeine Formel

$$[(Ma^{2+})_{y1}Mb^{2+})_{y2}]_{1-x}M^{3+}(OH)_2A_{x/n}\cdot mH_2O$$

dargestellte feste Hydrotalcit-Lösung, wobei $Ma^{2+}$ mindestens ein Metall darstellt, ausgewählt aus Mg, Ca, Sr und Ba, $Mb^{2+}$ ein Metall ist, ausgewählt aus Zn, Cd, Pb und Sn, $M^{3+}$ ein trivalentes Metall ist, $A^{n-}$ ein Anion mit einer Valenz von n ist, und x, y1, y2 und m jeweils positive Zahlen sind, die die Bedingungen $0 < x \leq 0{,}5$, $0{,}5 < y1 < 1$, $y1 + y2 = 1$ und $0 \leq m \leq 2$ erfüllen.

**4.** Ein Formteil, erhalten durch Schmelzformen einer in einem der Ansprüche 1 bis 3 beanspruchten Zusammensetzung.

**5.** Ein laminierter Artikel, bei dem mindestens eine Schicht aus einer in einem der Ansprüche 1 bis 3 beanspruchten Zusammensetzung aufgebaut ist.

**6.** Ein Formteil, wie in Anspruch 4 beansprucht, oder ein laminierter Artikel, wie in Anspruch 5 beansprucht, der mindestens uniaxial orientiert ist.

**Revendications**

**1.** Composition de résine, qui comprend :

(A) de 50 à 99,5 % en poids d'un copolymère saponifié éthylène-acétate de vinyle, ayant une teneur en éthylène de 20 à 60 % en moles, et ayant un degré de saponification de son constituant acétate de vinyle non inférieur à 95 % en moles,
(B) au moins 0,4 % en poids d'une résine de polyoléfine ayant un indice de fluidité de 0,01 à 100 g/10 min, déterminé à 210°C sous une charge de 2160 g selon JIS K-6760, et
(C) de 0,1 à 15 % en poids d'un polymère greffé obtenu par greffage d'un acide carboxylique à insaturation éthylénique ou des anhydrides ou semi-esters correspondants, sur une résine de polyoléfine ayant un degré de polymérisation de 350 à 45 000, le rapport de réaction, de la résine de polyoléfine à l'acide carboxylique à insaturation éthylénique ou ses anhydrides ou semi-esters correspondants, étant compris entre 100/0,05 et 100/10 en poids, et réaction du produit d'addition avec un polyamide ayant un degré de polymérisation de 100 à 500.

**2.** Composition selon la revendication 1, qui comprend en outre :
(D) une hydrotalcite représentée par la formule générale :

$$M_xAl_y(OH)_{2x+3y-2z}(E)_z\cdot aH_2O$$

dans laquelle M est Mg, Ca ou Zn, E est $CO_3$ ou $HPO_4$, x, y et z, chacun indépendamment de l'autre, représentent des nombres positifs, et a vaut 0 (zéro) ou est un nombre positif.

**3.** Composition selon la revendication 1, qui comprend en outre :
(D') une solution solide d'hydrotalcite représentée par la formule générale :

$$[(Ma^{2+})_{y1}Mb^{2+})_{y2}]_{1-x}M^{3+}(OH)_2A_{x/n}\cdot mH_2O$$

dans laquelle $Ma^{2+}$ représente au moins un métal choisi parmi Mg, Ca, Sr et Ba, $Mb^{2+}$ est un métal choisi parmi

Zn, Cd, Pb et Sn, $M^{3+}$ est un métal trivalent, An- est un anion ayant la valence n, et x, y1, y2 et m sont des nombres positifs satisfaisant aux conditions suivantes : $0 < x \leq 0{,}5$, $0{,}5 < y1 < 1$, $yy1 + y2 = 1$ et $0 \leq m < 2$.

**4.** Article façonné obtenu par moulage à l'état fondu d'une composition selon l'une quelconque des revendications 1 à 3.

**5.** Article stratifié dont au moins une couche est constituée d'une composition selon l'une quelconque des revendications 1 à 3.

**6.** Article façonné selon la revendication 4, ou article stratifié selon la revendication 5, présentant une orientation au moins unixiale.